# EUROPÄISCHE PATENTANMELDUNG

(11) **EP 2 460 624 A1**
(43) Veröffentlichungstag der Anmeldung: **06.06.2012**
(21) Anmeldenummer: 10193782.9
(22) Anmeldetag: 06.12.2010
(51) Int. Cl.: B24B 19/14, B24B 21/16, B24B 27/00, B24B 53/007, B24B 55/06, B24D 9/02, B25J 5/02

(54) **Schleifvorrichtung zum maschinellen Schleifen von Rotorblättern für Windkraftanlagen**

(71) Anmelder: Jöst GmbH, 69483 Wald-Michelbach (DE)
(72) Erfinder: Jöst, Peter, 69518 Abtsteinach (DE)
(74) Vertreter: Wegner, Hans

(57) **Zusammenfassung**

Schleifvorrichtung 1 zum maschinellen Schleifen von Rotorblättern 100 für Windkraftanlagen, aufweisend mindestens einen Industrieroboter 30 und eine Schleifeinheit 10, 50, 70, die vom Industrieroboter 30 geführt wird, wobei die Schleifeinheit 10, 50, 70 ein Schleifmittel 12, 52 und eine Reinigungsvorrichtung 20 aufweist, die das Schleifmittel 12, 52 an dessen Schleifoberfläche 64, 53 reinigt.

## Beschreibung

### 1. Gebiet der Erfindung

Die vorliegende Erfindung betrifft eine Schleifvorrichtung zum maschinellen Schleifen von Rotorblättern für Windkraftanlagen. Mit Hilfe der Schleifvorrichtung können Schleifarbeiten bei der Herstellung und bei der Wartung von Rotorblättern automatisiert werden.

### 2. Stand der Technik

Als eine der umweltfreundlichsten Formen der Energiegewinnung wird die Verwendung von Windkraft zur Stromerzeugung angesehen. Hierzu werden Windkraftanlagen verwendet, welche einen Rotor aufweisen, der einen Generator antreibt und der an einem Mast drehbar gelagert ist. Die Belastungen, denen die Bauteile, insbesondere die Rotorblätter der Windkraftanlage ausgesetzt sind, sind jedoch enorm.

Witterungseinflüsse, wie zum Beispiel Wind, Wasser, Hagel, UV-Strahlung, Erosions- und Biegebelastungen stellen höchste Anforderungen an das Material der Rotorblätter. Die Funktionsfähigkeit und die Oberflächenqualität sind wesentlich für die Effektivität und Wirtschaftlichkeit von Windkraftanlagen. Daher weisen die Rotorblätter eine besondere Beschichtung auf, deren Aufbringung sehr zeitaufwendig ist, da jede einzelne Schicht der Beschichtung in der Regel beschliffen werden muss.

Die extrem belasteten Kunststoffoberflächen von Rotorblättern sind mehrfach beschichtet. Die Beschichtungssysteme zum Schutz der Oberflächen bestehen aus einem sogenannten Gelcoat, Spachtel, Kantenschutz und Decklacken. Die dafür eingesetzten Produkte bestehen in der Regel aus lösemittelfreien, zweikomponentigen Polyurethanverbindungen. Nach dem Auftrag der einzelnen Schichten müssen diese jeweils beschliffen werden.

Diese Schleifarbeiten sind ein sehr personalintensiver Prozess, da sie manuell mit Handschleifmaschinen durchgeführt werden. Die zu schleifenden Rotorblätter weisen beispielsweise eine Länge von bis zu ca. 80 m und eine zu beschleifende Fläche von bis zu ca. 300 qm auf. Dementsprechend ist die manuell zu beschleifende Fläche sehr groß.

Ein weiterer Grund dafür, dass Schleifarbeiten an Rotorblättern immer noch manuell mithilfe von Handschleifmaschinen, beispielsweise mit Exzenterschleifern mit Staubabsaugung durchgeführt werden, besteht darin, dass die zu beschleifenden Rotorblätterbeschichtungen sehr zähelastisch eingestellt sind und sich daher die Schleifscheiben sehr schnell zusetzen. Mit einer Schleifscheibe kann nur eine kleine Fläche beschliffen werden und dann muss diese Schleifscheibe gegen eine neue Schleifscheibe gewechselt werden, was bei Handschleifmaschinen von Hand sehr schnell möglich ist. Aufgrund der häufigen Wechselraten konnten bislang auch Schleifroboter nicht wirtschaftlich eingesetzt werden. Mit einer Schleifscheibe können trotz Absaugung in der Regel nur ca. 0,5 qm - 1,5 qm der zähelastischen Beschichtung eines Rotorblatts beschliffen werden. Die Fläche eines Windkraftflügels von ca. 60 m bis ca. 80 m Flügellänge beträgt jedoch 160 qm bis 300 qm, so dass pro Rotorblatt und Schleifdurchgang ca. 300 - 600 Schleifscheiben eingesetzt werden müssen. In der Regel gibt es 3 - 4 Schleifdurchgänge pro Rotorblatt.

Die zähelastischen Beschichtungen der Rotorblätter werden deshalb verwendet, weil Rotorblätter sich mit Geschwindigkeiten von bis zu 300 km/h bewegen und sie nicht beschädigt werden dürfen, wenn beispielsweise Hagelkörner auf sie aufschlagen. In den Druckschriften DE 298 05 833 U1, DE 199 29 386 A und DE 297 09 342 U1 werden Beschichtungssysteme für Rotorblätter beschrieben.

Die gewaltigen Dimensionen der Rotorblätter und die Probleme, die beim Beschleifen der zähelastischen Beschichtung auftreten, haben bisher noch keine Automatisierung der Schleifarbeiten zugelassen. Die Kosten der Schleifarbeiten können 30% und mehr der Herstellungskosten eines Rotorblatts betragen.

Es ist daher die Aufgabe der vorliegenden Erfindung, die oben genannten Probleme zu lösen und den Schleifprozess bei Rotorblättern für Windkraftanlagen zu verbessern und kostengünstiger zu gestalten.

### 3. Zusammenfassung der Erfindung

Die oben genannte Aufgabe wird gelöst durch eine Schleifvorrichtung zum maschinellen Schleifen von Rotorblättern für Windkraftanlagen gemäß Patentanspruch 1.

Insbesondere werden die oben genannten Aufgaben gelöst durch eine Schleifvorrichtung zum maschinellen Schleifen von Rotorblättern für Windkraftanlagen, aufweisend mindestens einen Industrieroboter und eine Schleifeinheit, die vom Industrieroboter geführt wird, wobei die Schleifeinheit ein Schleifmittel und eine Reinigungsvorrichtung aufweist, die das Schleifmittel an dessen Schleifoberfläche reinigt.

Dadurch, dass eine Schleifeinheit verwendet wird, die ein Schleifmittel umfasst, welches an der Schleifoberfläche gereinigt wird, kann vorteilhafterweise in der Schleifvorrichtung ein Industrieroboter verwendet werden, der eine Schleifeinheit führt. Dies war bei konventionellen Schleifmitteln nicht möglich, da aufgrund des schnellen Zusetzens der Schleifmittel und der hohen Wechselraten der Schleifmittel ein Robotereinsatz unwirtschaftlich war. Durch die Reinigungsvorrichtung erhöht sich nun die Standzeit des Schleifmittels um das 10 bis 100-fache, sodass zum Schleifen der Oberfläche eines Rotorblatts kein oder nur sehr wenige Werkzeugwechsel erforderlich sind und ein Industrieroboter zum Schleifen von Rotorblättern nun wirtschaftlich verwendet werden kann.

Bevorzugt reinigt die Reinigungsvorrichtung die Schleifoberfläche des Schleifmittels entweder von Zeit zu Zeit oder während des Schleifens kontinuierlich. Die Schleifoberfläche kann, wenn notwendig, von Zeit zu Zeit gereinigt werden, etwa abhängig vom Grand der Zusetzung der Schleifoberfläche, in dem die Schleifoberfläche nach einer gewissen Schleifzeit mit einer Reinigungsvorrichtung in Kontakt gebracht. Alternativ ist die Reinigungsvorrichtung während des Schleifens mit einem Teil der Schleifoberfläche in Kontakt und reinigt diese kontinuierlich während des Schleifens.

Bevorzugt reinigt die Reinigungsvorrichtung die Schleifoberfläche mittels einer Düse zum Aufblasen von Druckluft und/oder einer Vorrichtung zum Absaugen von Schleifstaub und/oder einer Bürste zum Abbürsten der Schleifoberfläche. Diese drei Maßnahmen, entweder einzeln oder in beliebiger Kombination miteinander führen dazu, dass auch der Abrieb von zähelastischen Beschichtungen von Schleifoberfläche des Schleifmittels quasi vollständig entfernt wird und dort nicht anhaften und die Schleifoberfläche zusetzen kann. Durch das aktive Abreinigen der Schleifoberfläche erhöht sich die Standzeit des Schleifmittels jedoch auch die Qualität des Schleifvorgangs.

Beim Aufblassen von Druckluft mittels einer Düse werden anhaftende Schleifpartikel gelöst, durch das Absaugen von Schleifstaub werden diese aktiv von der Schleifoberfläche entfernt und mit einer Bürste ist es möglich, selbst stark an der Schleifoberfläche anhaftenden Schleifstaub oder größere klebrige Anhaftungen sicher zu entfernen. Eine derartige Schleifvorrichtung kann sowohl für eine diskontinuierliche wie für eine kontinuierliche Reinigung der Schleifoberfläche des Schleifmittels verwendet werden.

In einer bevorzugten Ausführungsform weist die Schleifvorrichtung weiterhin eine Antriebseinheit zum Verfahren des Industrieroboters in Richtung der Längsachse L eines Rotorblatts auf. Damit kann der Industrieroboter an dem Rotorblatt entlang fahren und die gesamte Oberfläche des Rotorblattes beschleifen.

In einer bevorzugten Ausführungsform weist die Schleifeinheit eine Trommelschleifeinheit mit einer Schleifhülse auf. Eine Schleifhülse hat eine vergleichsweise große Schleifoberfläche, welche an ihrem nicht mit dem Rotorblatt aktuell in Eingriff stehenden Bereich gereinigt werden kann. Die Trommelschleifeinheiten sind außerdem sehr kompakt und lassen sich gut mit einem Industrieroboter bewegen, um die Oberfläche des Rotorblatts wie gewünscht zu beschleifen.

In einer bevorzugten Ausführungsform weist die Trommelschleifeinheit eine feste Saugtrommel und elastische, pneumatisch ausdehnbare Spannelemente auf, die am Mantel der Saugtrommel angeordnet sind, wobei die Schleifhülse durch Druckbeaufschlagung auf die Spannelemente an der Saugtrommel befestigt wird. Durch eine solche Ausgestaltung der Trommelschleifeinheit ist es möglich, die Schleifhülse sehr einfach und schnell an einer Saugtrommel zu befestigen, sodass ein Werkzeugwechsel, d.h. ein Wechsel der Schleifhülse sehr leicht und schnell vorgenommen werden kann.

Die elastischen, pneumatisch ausdehnbaren Spaltelemente haben weiterhin den Vorteil, dass die Schleifhülse sich in gewissem Maße an die Oberfläche des Rotorblatts anpasst und kleinere Ungenauigkeiten bei der Positionierung der Schleifvorrichtung ausgleicht.

Bevorzugt weist die Saugtrommel Absaugöffnungen am Mantel auf, zwischen den Spannelementen sind luftdurchlässige Räume vorhanden und die Schleifhülse ist im Wesentlichen über ihre gesamte Oberfläche mit Perforationsöffnungen versehen, damit Schleifstaub von der Schleifoberfläche durch die Perforationsöffnungen, die luftdurchlässigen Räumen und durch die Absaugöffnungen hindurch abgesaugt werden kann. Mit einem derartigen Aufbau der Trommelschleifeinheit ist es möglich, einerseits die oben genannte einfach pneumatische Spannung der Schleifhülse an einer festen Saugtrommel vorzunehmen und andererseits durch die Spannelemente, die Saugtrommel und durch die Schleifhülse hindurch Schleifstaub von der Schleifoberfläche abzusaugen. Damit kann ein vollflächiger Staubabtrag von der Schleifoberfläche erfolgen, wodurch ein Zusetzen der Schleifoberfläche weiterhin minimiert wird und ein nahezu staubloses Schleifen ermöglicht wird.

In einer bevorzugten Ausführungsform weist die Schleifhülse eine luft- und partikelstromdurchlässige Schicht, insbesondere eine Fließschicht auf, durch die hindurch Absaugluft und Schleifstaub quer hinter der Schleifoberfläche von den Perforationsöffnungen zu den luftdurchlässigen Räumen strömen kann. Durch die Fließschicht, durch die Absaugluft und Schleifstaub quer hinter der Oberfläche strömen kann, können die Perforationsöffnungen vollflächig über die Schleifoberfläche der Schleifhülse angeordnet sein, sodass der Weg des Schleifstaubes von seiner Entstehung an der Schleifoberfläche bis zur Perforationsöffnung, an der abgesaugt wird, sehr kurz ist. Dementsprechend ermöglicht die luft- und partikelstromdurchlässige Schicht hinter der Schleifoberfläche eine vollflächige Staubabsaugung und verhindert ein Zusetzen der Schleifhülse. Dieser Staubtransport erfolgt somit vollflächig und unabhängig von der Anordnung der luftdurchlässigen Räume, die von den elastischen pneumatisch ausdehnbaren Elementen gebildet werden.

Bevorzugt umfasst die Schleifeinheit mehrere Trommelschleifeinheiten, die jeweils in Kontakt mit der Oberfläche des Rotorblatts gebracht werden können. Durch eine solche Anordnung, beispielsweise in Form eines Trommelschleifeinheiten-Revolvers können Schleifhülsen, die im Moment nicht im Eingriff mit dem Rotorblatt stehen gewechselt oder gereinigt werden, ohne dass sich dadurch die Schleifzeit für das Rotorblatt insgesamt signifikant verlängert. Auch ist es möglich auf den einzelnen Trommelschleifeinheiten Schleifhülsen unterschiedlicher Körnung oder Staubwalzen aufzubringen und sehr schnell einzusetzen.

Bevorzugt reinigt eine Reinigungseinheit eine der Trommelschleifeinheiten, die nicht in Eingriff mit der Oberfläche des Rotorblatts stehen.

In einer weiteren bevorzugten Ausführungsform weist die Schleifeinheit eine Bandschleifeinheit mit einem umlaufenden Schleifband auf. Ein umlaufendes Schleifband ist nur mit einem Teil seiner Schleifoberfläche in Eingriff mit dem Rotorblatt und der nicht in Eingriff mit dem Rotorblatt stehende Teil des umlaufenden Schleifbandes kann an einer Reinigungsvorrichtung vorbeifahren, die eine Reinigung der Schleifoberfläche vornimmt. Dementsprechend eignet sich diese Ausführungsform ebenfalls besonders gut für eine kontinuierliche Reinigung der Schleifoberfläche während des Betriebs.

Bevorzugt ist als Schleifband ein perforiertes Schleifband, welches im Wesentlichen über seine gesamte Oberfläche mit Perforationsöffnungen versehen ist. Durch die Perforationsöffnungen kann der entstehende Schleifstaub auf kürzestem Wege hinter die Schleifebene abgesaugt werden, sodass ein Zusetzen des Schleifbandes vermieden wird und ein nahezu staubloses Schleifen ermöglicht wird.

In einer weiteren bevorzugten Ausführungsform weist die Schleifvorrichtung weiterhin eine Staubentfernungseinheit mit einem umlaufenden Staubband oder einer Staubhülse auf, welche durch den Industrieroboter an zumindest einer Oberfläche eines Rotorblatts entlang geführt werden, um die Oberfläche des Rotorblatts mechanisch von Staub zu befreien. Mit der erfindungsgemäßen Vorrichtung kann nicht nur die Oberfläche eines Rotorblatts automatisiert geschliffen werden, sondern es ist auch möglich, nach dem Schleifen mit einem umlaufenden Staubband oder einer Staubhülse mechanisch Staub von der geschliffenen Oberfläche restlos zu entfernen, sodass unmittelbar danach einer Auftrag einer weiteren Lackschicht erfolgen kann. Vorteilhafterweise kann hierzu die schon vorhandene Schleifeinheit als Staubentfernungseinheit verwendet werden, sodass hier nur ein geringer zusätzlicher Aufwand betrieben werden muss. Ein automatisiertes Entstauben der Schleifoberfläche ist wesentlich schneller durchführbar als manuelles Entstauben mittels Tüchern oder Ähnlichem.

In einer bevorzugten Ausführungsform weist der Industrieroboter Drucksensoren an zumindest einem Roboterarm oder am Kopf zur Steuerung des Anpressdrucks der Schleifeinheit auf das Rotorblatt auf. Mit Hilfe dieser Drucksensoren wird sichergestellt, dass der Roboterarm den notwendigen Schleifdruck bzw. den notwendigen und genau definierten Druck zur Abreinigung der Oberfläche des Rotorblatts ausübt. Dadurch wird ein sehr gleichmäßiges Schleif- und Reinigungsergebnis erzielt.

Bevorzugt wird der Industrieroboter auch zum Lackieren des Rotorblattes eingesetzt. Damit verringern sich die Investitionskosten der gesamten Anlage auf ein Minimum, wobei in einer Anlage sowohl das Lackieren eines Rotorblattes als auch das Schleifen bzw. das Entstauben eines Rotorblatts mit demselben Industrieroboter erfolgt, der die dazu erforderlichen Werkzeuge zwischen den einzelnen Arbeitsgängen lediglich wechseln muss. Auch ein derartiger Wechsel kann selbstverständlich automatisch erfolgen. Dementsprechend verkürzen sich die gesamten Beschichtungsvorgänge, inklusive Schleifen und Entstauben eines Rotorblattes auf ein Bruchteil der Zeit, verglichen mit konventionellen System in denen manuell geschliffen werden muss und oft auch manuell lackiert wird. Dementsprechend verringern sich durch die erfindungsgemäße Schleifvorrichtung sowohl die Bearbeitungszeiten als auch die Bearbeitungskosten.

Weitere bevorzugte Ausführungsformen der Erfindung ergeben sich aus den Unteransprüchen.

### 4. Kurze Beschreibung der Zeichnungen

Im Folgenden werden bevorzugte Ausführungsformen der Erfindung mit Bezug auf die begleitenden Zeichnungen beschrieben. In diesen zeigt:
- Fig.1:: Eine erste bevorzugte Ausführungsform einer Schleifvorrichtung zum maschinellen Schleifen von Rotorblättern für Windkraftanlagen in einer Vorderansicht;
- Fig. 2:: die Schleifvorrichtung der Fig. 1 in einer Draufsicht;
- Fig. 3:: eine Trommelschleifeinheit der Schleifvorrichtung gemäß Fig. 1 in einer Schnittansicht von der Seite;
- Fig. 4:: ein Detail der Trommelschleifeinheit der Fig. 3 in einer Schnittansicht von der Seite;
- Fig. 5:: die Trommelschleifeinheit der Fig. 3 in einer Schnittansicht von vorne;
- Fig. 6:: eine zweite Ausführungsform einer Schleifvorrichtung zum maschinellen Schleifen von Rotorblättern für Windkraftanlagen in einer Vorderansicht;
- Fig. 7:: die Schleifvorrichtung gemäß Fig. 6 mit einer alternativen Führung des Industrieroboters an der Wand in einer Draufsicht; und
- Fig. 8:: eine Vorderansicht einer weiteren bevorzugten Ausführungsform einer Schleifvorrichtung zum maschinellen Schleifen von Rotorblättern für Windkraftanlagen mit einer Bandschleifeinheit in einer Vorderansicht.

### 5. Beschreibung bevorzugter Ausführungsformen

Im Folgenden werden bevorzugte Ausführungsformen der Erfindung mit Bezug auf die Figuren beschrieben. Einzelne Merkmale der hier beschriebenen Ausführungsformen können mit anderen Ausführungsformen der Erfindung kombiniert werden.

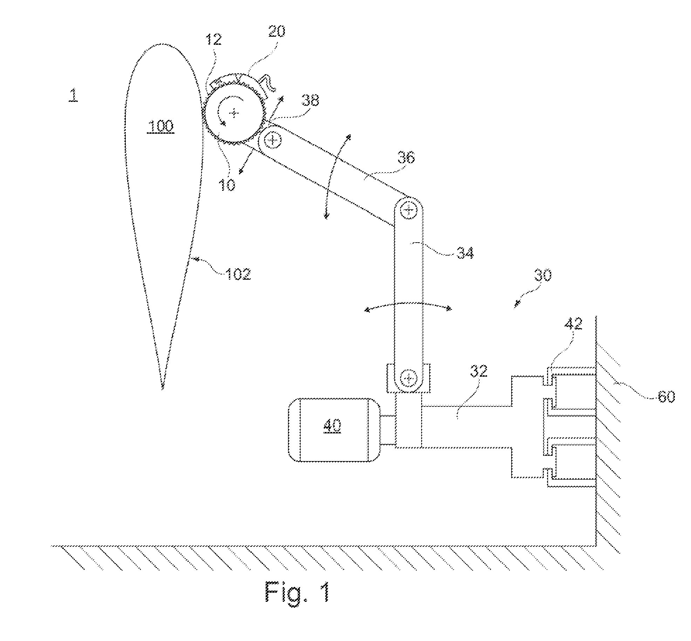

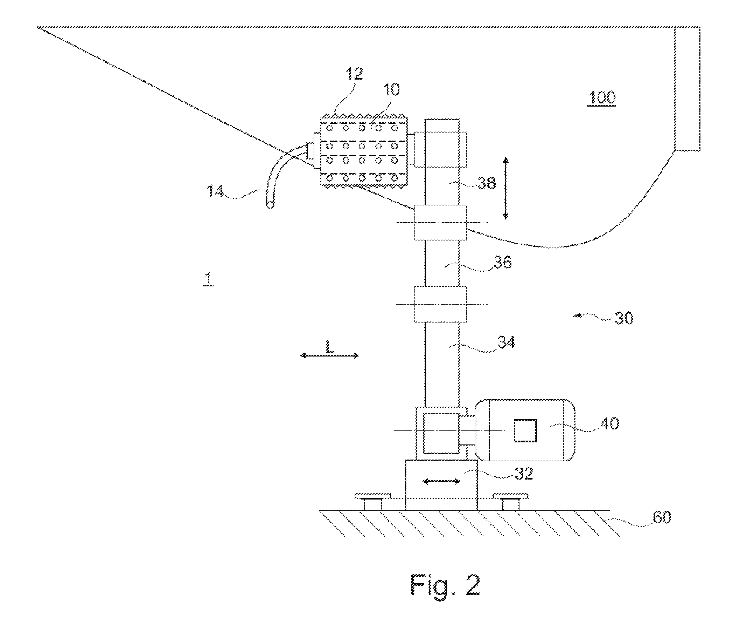

Die Figuren 1 und 2 zeigen eine Vorderansicht und eine Draufsicht einer Schleifvorrichtung 1 zum maschinellen Schleifen von Rotorblättern 100. In Figur 1 ist rechts vom Rotorblatt 100 ein Industrieroboter 30 an der Wand 60 eines Gebäudes längsverschieblich angeordnet. Der Industrieroboter 30 kann mit Hilfe eines Fahrwerks 32 an der Wand 60 entlang der Längsachse L des Rotorblatts 100 an Wandschienen 42 entlangfahren. Der Industrieroboter 30 ist nur symbolisch dargestellt und kann jeder beliebige Industrieroboter sein, der für die im Folgenden beschriebene Aufgabe geeignet ist. Wie dargestellt, umfasst der Industrieroboter 30 ein Fahrwerk 32, einen Antriebsmotor 40, einen ersten Arm 34, der an dem Fahrwerk 32 gelenkig angebracht ist, einen zweiten Arm 36, der am ersten Arm 34 gelenkig angebracht ist sowie einen Kopf 38, der an dem zweiten Arm gelenkig angebracht ist. Je nach Bauart des Industrieroboters 30 können weitere Schwenk- oder Drehachsen vorgesehen sein. Alle Achsen des Industrieroboters 30 sind auf übliche Weise motorisch angetrieben und werden mittels einer NC-Steuerung anhand eines Programms gesteuert.

An dem Kopf 38 des Industrieroboters 30 ist eine Schleifeinheit in Form einer Trommelschleifeinheit 10 befestigt, die NC-gesteuert durch den Industrieroboter 30 entlang der Oberfläche 102 des Rotorblatts 100 entlang geführt werden kann, um die Oberfläche zu beschleifen. Mit Hilfe des Industrieroboters 30 ist es damit möglich, zumindest eine Seite der Oberfläche 102 des Rotorblatts 100 maschinell zu beschleifen. Für die andere Seite des Rotorblatts 100 kann ein zweiter Industrieroboter 30 mit einer Schleifeinheit 10, 50, 70 vorgesehen sein. Alternativ kann das Roboterblatt 100 auch um seine Längsachse drehbar gelagert sein, so dass die zu beschleifende Seite in Richtung des Industrieroboters 30 gedreht werden kann.

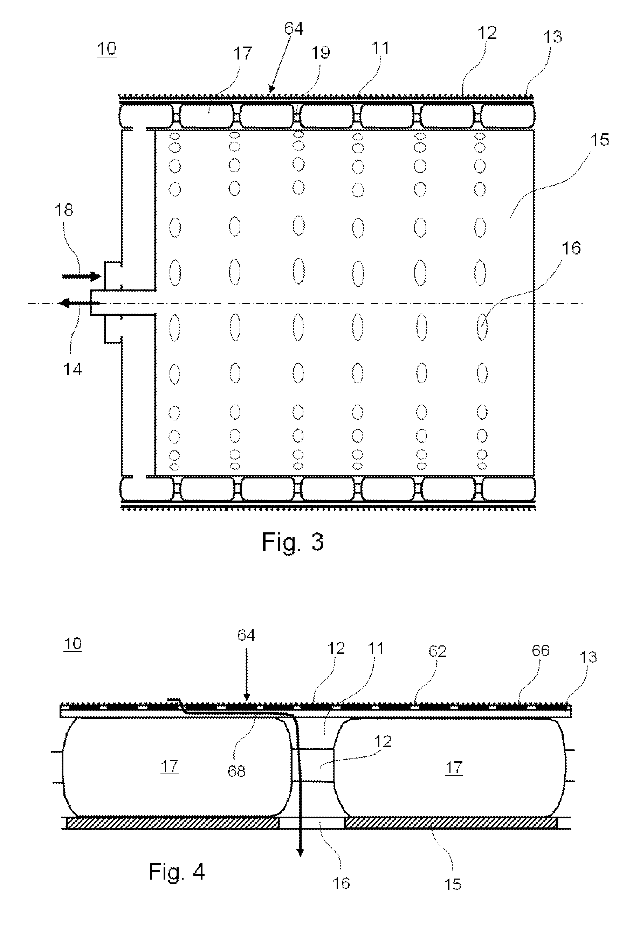

Die Trommelschleifeinheit 10 ist im Folgenden in den Figuren 3, 4 und 5 im Detail dargestellt. Figur 3 zeigt einen Querschnitt durch eine bevorzugte Trommelschleifeinheit 10. Die Trommelschleifeinheit 10 umfasst eine feste Saugtrommel 15, die mit Absaugöffnungen 16 an ihrem Umfang ausgerüstet ist. Um den Mantel der festen Trommel 15, welche bevorzugt aus einem Leichtmetall besteht, sind elastische und pneumatisch ausdehnbare Spannelemente 17 angeordnet. Die elastischen Spannelemente 17 bestehen bevorzugt aus einem Kunststoffmaterial und werden über einen Drucklufteinlass 18 mit Spannluft versorgt. Die Spannelemente 17 sind untereinander über Kanäle 19 miteinander pneumatisch verbunden, sodass sie zwischen sich luftdurchlässige Räume 11 bilden, durch die Staub in die Saugtrommel 15 hinein abgesaugt werden kann. Die Spannelemente 17 sind bevorzugt als flache torusförmige Ringe oder als einzelne, beliebig geformte Kissen ausgebildet.

Ein Schleifmittel in Form einer Schleifhülse 12 wird auf die Saugtrommel 15 mit den am Mantel befindlichen Spannelementen 17 aufgeschoben und durch eine Druckbeaufschlagung auf die Spannelemente 17 an der Saugtrommel 15 befestigt. Dabei dehnen sich die Spannelemente 17 durch Einleiten von Spannluft 18 aus und halten die Schleifhülse 12 von innen fest auf der Saugtrommel 15. Durch diese pneumatische Befestigungsart ist es besonders einfach, die Schleifhülse 12 auf der Saugtrommel 15 zu spannen und die Schleifhülse 12 nach Ablauf ihrer Standzeit auszutauschen. Die Schleifhülse 12 besteht bevorzugt aus einem breiten, mit Schleifkorn beschichteten Schleifband 66 aus einem Gewebe, das zu einer zylinderförmigen Hülse zusammengeklebt ist.

Die Trommelschleifeinheit 10 ist bevorzugt mit einer Staubabsaugung 14 ausgerüstet, die es ermöglicht, den entstehenden Schleifstaub durch die Schleifhülse 12 hindurch während des Schleifens abzusaugen. Dazu ist die Schleifhülse 12 bevorzugt im Wesentlichen über ihre gesamte Oberfläche mit Perforationsöffnungen 62 versehen, die sich zumindest durch die Schleifbandschicht 66 erstrecken, damit Schleifstaub von der Schleifoberfläche 64 durch die Perforationsöffnungen 62, die luftdurchlässigen Räume 11 zwischen den Spannelementen 17 und durch die Absaugöffnungen 16 hindurch in die Saugtrommel 15 hinein abgesaugt werden kann. Von der Spanntrommel 15 wird die Saugluft zusammen mit den Schleifspänen durch einen Saugluftanschluss 14 hindurch in ein Absaugsystem (ähnlich einem Staubsauger) abgesaugt.

Eine besonders effektive Staubabsaugung wird dann erreicht, wenn die Schleifhülse 12 zusätzlich auf der Innenseite eine luft- und partikelstromdurchlässige Schicht 13, insbesondere eine Vliesschicht aufweist, durch die Absaugluft und Schleifstaub quer hinter der Schleifoberfläche 64 von den Perforationsöffnungen 62 zu den luftdurchlässigen Räumen 11 strömen kann. Dies ist durch den Pfeil 68 in Fig. 4 beispielhaft angedeutet. Damit kann die Größe und Anordnung der Perforationsöffnungen 62 der Schleifhülse 12 entsprechend dem entstehenden Schleifstaub gewählt werden und braucht nicht an die Anordnung der luftdurchlässigen Räume 11 zwischen den Spannelementen 17 angepasst werden. Bevorzugt haben die Perforationsöffnungen 62 einen Durchmesser von ca. 1 mm - 6 mm und sind voneinander ca. 10 mm - 50 mm beabstandet und im Wesentlichen gleichmäßig über die gesamte Oberfläche der Schleifhülse 12 verteilt. Dementsprechend kann so eine nahezu vollständige Absaugung des Schleifstaubs erfolgen, sodass schon aus diesem Grund ein Zusetzen der Schleifoberfläche 64 der Schleifhülse 12 vermieden wird und nur sehr wenig Staub in die Umgebung abgegeben wird.

Die Trommelschleifeinheit 10 umfasst weiterhin einen Antriebsmotor (nicht dargestellt), der die Saugtrommel 15 mit der Schleifhülse 12 um ihre Rotationsachse drehbar antreibt, um so die Oberfläche 102 zu beschleifen.

Der Industrieroboter 30 umfasst bevorzugt in seinem Kopf 38 oder in seinen Armen 34, 36 einen Drucksensor (nicht dargestellt), um den Anpressdruck der Schleifeinheit 10 auf das Rotorblatt 100 zu regeln.

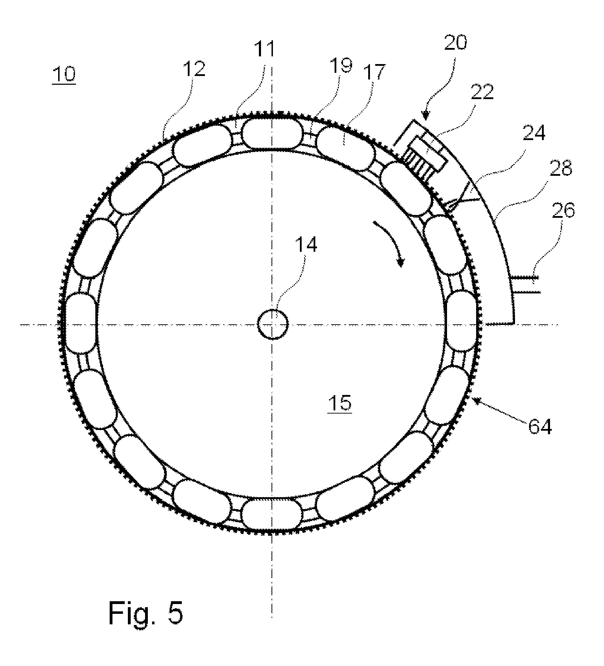

Wie in Figur 5 dargestellt, ist die Trommelschleifeinheit 10 weiterhin mit einer Reinigungsvorrichtung 20 ausgestattet. Die Reinigungsvorrichtung 20 umfasst eine Bürste 22 zum Abbürsten der Schleifoberfläche 64 der Schleifhülse 12. Weiterhin weist die Reinigungsvorrichtung 20 eine Düse 24 auf, mit der Druckluft auf die Oberfläche 64 der Schleifhülse 12 aufgeblasen werden kann. Zusätzlich weist die Reinigungsvorrichtung 20 eine umgebende Haube 28 auf, an der eine Absaugung 26 angeschlossen ist, um den von der Bürste 22 und der Düse 24 gelösten Schleifstaub abzusaugen. Die Absaugung 26 kann an die Absaugung der Saugtrommel 15 angeschlossen werden.

Die Reinigungsvorrichtung 20 löst auf effektive Weise an der Schleifoberfläche 64 der Schleifhülse 12 anhaftenden Schleifstaub, welcher sich nicht durch die normale Absaugung entfernen lässt. Dies ist insbesondere deshalb entscheidend für eine effektive Verwendung einer erfindungsgemäßen Schleifvorrichtung 1, da ein Industrieroboter 30 nur dann sinnvoll zum Schleifen von Rotorblättern 100 verwendet werden kann, wenn die Standzeit des Schleifmittels 12, 52 so hoch ist, dass eine signifikante Fläche des Rotorblatts 100 geschliffen werden kann, ohne dass das Schleifmittel 12, 52 ausgetauscht werden muss. Mithilfe der Reinigungsvorrichtung 20 ist es möglich, auch fest anhaftenden oder klebrigen Schleifstaub der zähelastischen Beschichtungen eines Rotorblatts 100 von der Schleifoberfläche 64 einer Schleifhülse 12 oder dem später beschriebenen Schleifband 52 zu entfernen.

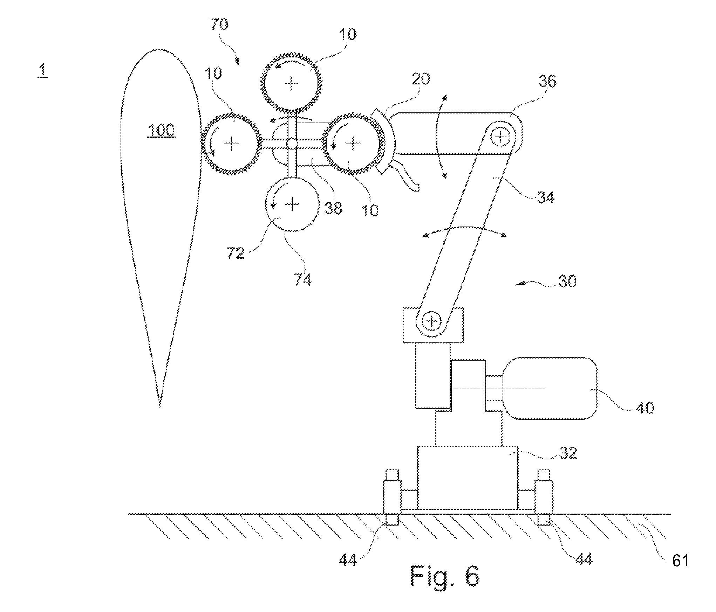

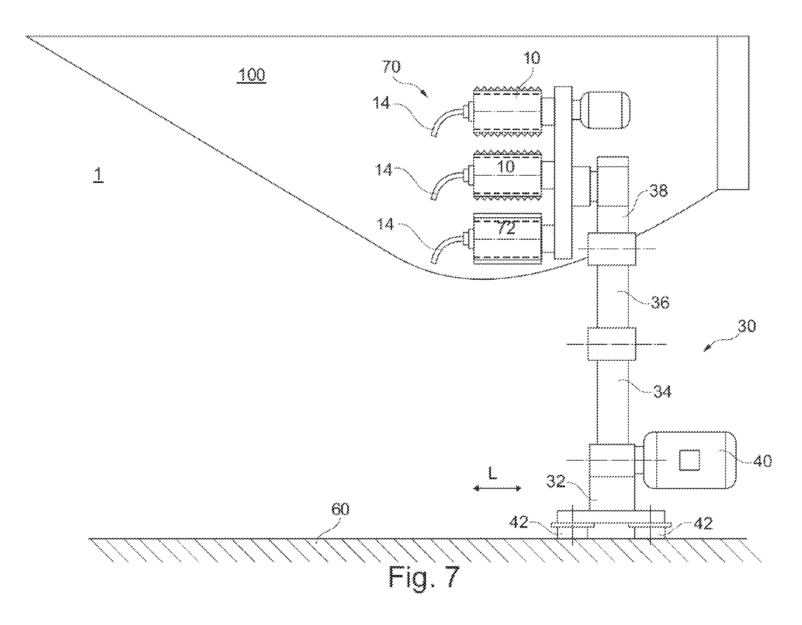

Die Figuren 6 und 7 zeigen eine weitere Ausführungsform einer Schleifvorrichtung 1 mit einem Industrieroboter 30. In Figur 6 ist der Industrieroboter über ein Fahrwerk 32 an Bodenschienen 44 auf dem Boden 61 einer Anlage längsverschieblich geführt. Figur 7 zeigt eine dazu alternative Ausführungsform, bei der der Industrieroboter 30 über ein Fahrwerk 32 an Wandschienen 42 an der Wand 60 eines Gebäudes geführt ist. Die Schleifvorrichtung 1 der Figuren 5 und 6 unterscheidet sich von der Ausführungsform nach Figur 1 und 2 darin, dass am Kopf 38 des Industrieroboters 30 eine Vierfachschleifeinheit 70 angebracht ist, welche drei Trommelschleifeinheiten 10, wie jene der Figuren 3 - 5, sowie eine Staubentfernungseinheit in Form einer Reinigungswalze 72 umfasst. Die Vierfachschleifeinheit 70 kann, ähnlich einem Werkzeugrevolver, um jeweils einen Winkel von 90° verschwenkt werden, damit entweder eine neue Trommelschleifeinheit 10 oder die Reinigungswalze 72 am Rotorblatt 100 verwendet werden kann.

Die Reinigungswalze 72 ist ähnlich der Trommelschleifeinheit 10 aufgebaut, besitzt jedoch anstatt einer Schleifhülse 12 eine Reinigungshülse aus einem weichen staubaufnehmenden und luftdurchlässigen Stoff- oder Vliesmaterial. Mit Hilfe der Staubentfernungseinheit in Form einer Reinigungswalze 72 kann die Oberfläche 102 des Rotorblatts 100 nach dem Schleifvorgang mechanisch vom verleibenden Staub gereinigt werden, so dass sie unmittelbar danach neu beschichtet werden kann.

In der in den Figuren 6 und 7 dargestellten Ausführungsform sind die Schleifvorrichtungen 10 bzw. die Reinigungswalze 72 nicht jeweils mit einer eigenen Reinigungsvorrichtung 20 ausgestattet, sondern es eine gemeinsame Reinigungsvorrichtung 20 ist für alle vier Einheiten 10, 72 vorgesehen. Die Reinigungsvorrichtung 20 ist am Kopf 38 an einer festen Position befestigt, beispielsweise in der Position der Figur 6. Zur diskontinuierlichen Reinigung werden die Trommelschleifeinrichtungen 10 und die Reinigungswalze 72 jeweils an die Reinigungsvorrichtung 20 herangeschwenkt und dort gereinigt. Somit ist eine Reinigung einer der Trommelschleifeinheiten 10 bzw. der Reinigungswalze 72 möglich, während gleichzeitig eine andere Einheit 10, 72 im Eingriff mit dem Rotorblatt 100 steht.

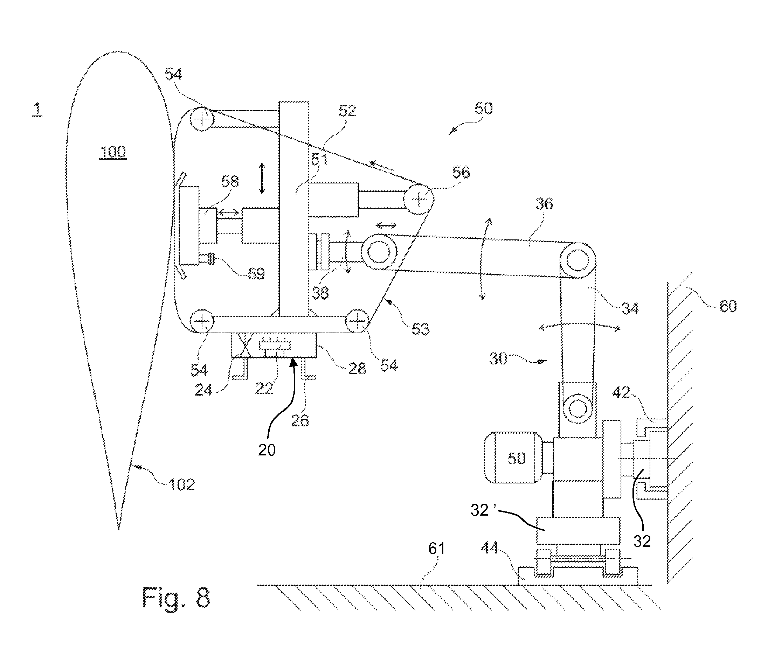

Figur 8 zeigt eine weitere Ausführungsform der Schleifvorrichtung 1 zum maschinellen Schleifen von Rotorblättern 100 für Windkraftanlagen. Bei dieser Ausführungsform der Schleifvorrichtung 1 wird vom Industrieroboter 30 eine Bandschleifeinheit 50 an der Oberfläche 102 des Rotorblatts entlang geführt, um diese zu beschleifen. Die Bandschleifeinheit 50 umfasst ein Gestell 51, an dem Führungsrollen 54 drehbar gelagert sind, welche ein Schleifband 52 endlos führen. Eine Spannrolle 56 spannt das Schleifband 52. Eine der Führungsrollen 54 ist bevorzugt mit einem Elektromotor angetrieben, um das Schleifband 52 umlaufen zu lassen. Das Schleifband 52 wird mittels Druckelementen 58 gleichmäßig an die Oberfläche 102 des Rotorblatts 100 angedrückt, sodass ein gleichmäßiger Schleifdruck gewährleistet ist. Die Druckelemente 58 sind weiterhin mit einer Absaugung 59 versehen, sodass Schleifstaub direkt beim Schleifen abgesaugt werden kann. Dazu ist das Schleifband 52 genauso wie oben beschriebene Schleifhülse 12 bevorzugt an seiner gesamten Oberfläche perforiert, sodass der Schleifstaub auf kürzestem Weg von der Schleifoberfläche 53 entfernt werden kann und ein nahezu staubfreies Schleifen möglich wird.

Ein wesentlicher Vorteil der Bandschleifeinheit 50 liegt darin, dass während des Schleifens nur ein Teil des Schleifbands 52 sich im schleifenden Eingriff mit der Oberfläche 102 des Rotorblatts 100 befindet. Damit ist es möglich, die Bereiche, die aktuell nicht im Eingriff mit der Oberfläche 102 sind, einer Reinigung durch eine Reinigungsvorrichtung 20 zu unterziehen. Die Reinigungsvorrichtung 20 umfasst, wie bei den oben beschriebenen Ausführungsformen, eine Düse 24 zum Aufblasen von Druckluft auf die Schleifoberfläche, um anhaftenden Schleifstaub zu entfernen. Weiterhin umfasst die Reinigungsvorrichtung 20 eine Bürste 22, um stärker anhaftenden Schleifstaub von der Schleifoberfläche des Schleifbandes 52 zu entfernen. Der gelöste Schleifstaub wird durch eine Absaugung 26 abgesaugt. Die Reinigungsvorrichtung 20 ist mit einer Haube 28 umgeben, sodass kein Staub an die Umgebung abgegeben wird. Durch die Reinigungsvorrichtung 20 ist es möglich, das Schleifband 52 kontinuierlich während des Betriebs an seiner Schleifoberfläche zu reinigen, sodass Schleifstaub nicht anhaften kann und es zu keinem Zusetzen des Schleifbands 52 kommt. Dies erhöht wesentlich die Standzeit des Schleifbandes 52, sodass es möglich ist, das komplette Rotorblatt 100 mit nur einem Schleifband vollständig zu beschleifen.

Ein weiterer Vorteil der Bandschleifeinheit 50 auch gegenüber von Trommelschleifeinheiten liegt darin, dass ihre Schleifleistung durch eine entsprechende Dimensionierung der Schleifmittelfläche anpassbar ist. Durch eine Wahl der Schleifmittelfläche, die durch die Breite und Länge des Schleifbandes 52 bestimmt wird, kann die Schleifleistung so auf das jeweils zu schleifende Rotorblatt abgestimmt werden, dass kein oder allenfalls wenige Wechsel des Schleifbandes 52 pro Schleifdurchgang notwendig sind.

Wie in den obigen Ausführungsformen, kann der Industrieroboter 30 mit Hilfe einer Antriebseinheit 32, 32' entweder an der Wand 60, als auch an dem Boden 61 geführt sein und insgesamt entlang der Längsrichtung L an dem Rotorblatt 100 entlang fahren. In Fig. 9 sind beide Alternativen der Antriebseinheit 32 und 32' dargestellt. Weiterhin kann der Industrieroboter 30 an einem seiner Arme 34, 36 oder an seinem Kopf 38 mit Drucksensoren ausgerüstet sein, um den Anpressdruck der Bandschleifeinheit 50 an die Oberfläche 102 genau einzustellen.

Mit den oben beschriebenen Ausführungsformen ist es zum ersten Mal möglich, Industrieroboter 30 wirtschaftlich beim Beschleifen von Rotorblättern 100 von Windkraftanlagen zu verwenden. Bevorzugt können diese Industrieroboter 30 auch weitere Funktionen übernehmen, wie beispielsweise das Entstauben des Rotorblatts 100 und das Lackieren bzw. Beschichten des Rotorblatts 100.

Wenn eine Bandschleifeinheit 50 verwendet wird, kann zum Entstauben des Rotorblatts 100, anstelle des Schleifbands 52 die Bandschleifeinheit 50 mit einem Staubband ausgerüstet werden, welches aus einem luftdurchlässigen Stoff- oder Vliesmaterial besteht. Dieses wird ähnlich wie das Schleifband 52 an der Oberfläche 102 des Rotorblatts 100 entlang geführt und nimmt dort mechanisch den anhaftenden Schleifstaub auf und reinigt die Oberfläche 102 sodass sie danach unmittelbar lackiert bzw. beschichtet werden kann.

Für diesen Lackiervorgang lässt sich der zum Schleifen bzw. zum Entstauben verwendete Industrieroboter 30 ebenfalls verwenden. Somit kann auf einer Anlage mit den selben Industrierobotern 30 der komplette Beschichtungsprozess, der aus mehreren Lackier-, Schleif und Reinigungsvorgängen besteht, durchgeführt werden. Manuelle Tätigkeiten wie beispielsweise ein manuelles Schleifen oder ein manuelles Reinigen entfallen somit vollständig. Damit verkürzt sich die Fertigungszeit für das Rotorblatt von Windkraftanlagen und entsprechend auch die Herstellungskosten. Weiterhin wird durch die Reinigung des Schleifmittels eine hohe Einsparung an Schleifmitteln erzielt, was wiederum die Herstellkosten senkt.

## Patentansprüche

1. Schleifvorrichtung (1) zum maschinellen Schleifen von Rotorblättern (100) für Windkraftanlagen, aufweisend:
a. mindestens einen Industrieroboter (30); und
b. eine Schleifeinheit (10, 50, 70), die vom Industrieroboter (30) geführt wird; wobei
b. die Schleifeinheit (10, 50, 70) ein Schleifmittel (12, 52) und eine Reinigungsvorrichtung (20) aufweist, die das Schleifmittel (12, 52) an dessen Schleifoberfläche (64, 53) reinigt.

2. Schleifvorrichtung gemäß Anspruch 1, wobei Reinigungsvorrichtung (20) die Schleifoberfläche (64, 53) des Schleifmittels (12, 52) entweder
a. von Zeit zu Zeit in einem Reinigungsvorgang reinigt; oder
b. während des Schleifens kontinuierlich reinigt.

3. Schleifvorrichtung gemäß einem der Ansprüche 1 oder 2, wobei die Reinigungsvorrichtung (20) die Schleifoberfläche (64, 53) reinigt, mittels:
a. einer Düse (24) zum Aufblasen von Druckluft; und/oder
b. einer Vorrichtung (26) zum Absaugen von Schleifstaub; und/oder
c. einer Bürste (22) zum Abbürsten der Schleifoberfläche (64, 53).

4. Schleifvorrichtung gemäß einem der Ansprüche 1 - 3, weiterhin aufweisend eine Antriebseinheit (32, 32') zum Verfahren des Industrieroboters (30) in Richtung (L) der Längsachse eines Rotorblatts (100).

5. Schleifvorrichtung gemäß einem der Ansprüche 1 - 4, wobei die Schleifeinheit (10, 70) eine Trommelschleifeinheit (10) mit einer Schleifhülse (12) aufweist.

6. Schleifvorrichtung gemäß Anspruch 5, wobei die Trommelschleifeinheit (10) aufweist:
a. eine feste Saugtrommel (15); und
b. elastische, pneumatisch ausdehnbare Spannelemente (17), die am Mantel der Saugtrommel (15) angeordnet sind;
c. wobei die Schleifhülse (12) durch Druckbeaufschlagung auf die Spannelemente (17) an der Saugtrommel (15) befestigt wird.

7. Schleifvorrichtung gemäß Anspruch 6, wobei
a. die Saugtrommel (15) Absaugöffnungen (16) am Mantel aufweist
b. zwischen den Spannelementen (17) luftdurchlässige Räume (11) vorhanden sind; und
c. die Schleifhülse (12) im Wesentlichen über ihr gesamte Oberfläche mit Perforationsöffnungen (62) versehen ist;
damit Schleifstaub von der Schleifoberfläche (64) durch die Perforationsöffnungen (62), die luftdurchlässigen Räume (11) und durch die Absaugöffnungen (16) hindurch abgesaugt werden kann.

8. Schleifvorrichtung gemäß Anspruch 7, wobei die Schleifhülse (12) eine luft- und partikelstromdurchlässige Schicht (13), bevorzugt eine Vliesschicht (13) aufweist, durch die hindurch Absaugluft und Schleifstaub quer hinter der Schleifoberfläche (64) von den Perforationsöffnungen (62) zu den luftdurchlässigen Räumen (11) strömen kann.

9. Schleifvorrichtung gemäß einem der Ansprüche 5 - 8, wobei die Schleifeinheit (70) mehrere Trommelschleifeinheiten (10) umfasst, die jeweils einzeln in Eingriff mit der Oberfläche (102) des Rotorblatts (100) gebracht werden können.

10. Schleifvorrichtung gemäß Anspruch 9, wobei eine Reinigungseinheit (20) eine der Trommelschleifeinheiten (10) reinigen kann, die nicht in Eingriff mit der Oberfläche des Rotorblatts (100) stehen.

11. Schleifvorrichtung gemäß einem der Ansprüche 1 - 4, wobei die Schleifeinheit (50) eine Bandschleifeinheit (50) mit einem umlaufenden Schleifband (52) aufweist.

12. Schleifvorrichtung gemäß Anspruch 11, wobei das Schleifband (52) ein perforiertes Schleifband ist, welches zur Staubabsaugung durch das Schleifband (52) hindurch im Wesentlichen über seine gesamte Oberfläche mit Perforationsöffnungen versehen ist.

13. Schleifvorrichtung gemäß einem der Ansprüche 1 - 12, weiterhin aufweisend eine Staubentfernungseinheit (72) mit
a. einem umlaufenden Staubband; oder
b. mit einer Staubhülse (74);
welche durch den Industrieroboter (30) an zumindest einer Oberfläche (102) eines Rotorblatts (100) entlang geführt werden, um die Oberfläche (102) des Rotorblatts (100) mechanisch von Staub zu befreien.

14. Schleifvorrichtung gemäß einem der Ansprüche 1 - 13, wobei der Industrieroboter (30) Drucksensoren an zumindest einem Roboterarm (34, 36) oder am Kopf (38) aufweist, zur Steuerung des Anpressdrucks der Schleifeinheit (10, 50, 70) oder der Staubentfernungseinheit (72) auf das Rotorblatt (100).

15. Schleifvorrichtung gemäß einem der Ansprüche 1 - 14, wobei der Industrieroboter (30) auch zum Beschichten oder Lackieren des Rotorblattes (100) eingesetzt wird.
